Europäisches Patentamt

European Patent Office

Office européen des brevets

(19)

(11) Numéro de publication: **0 517 891 B1**

(12) **FASCICULE DE BREVET EUROPEEN**

(45) Date de publication du fascicule du brevet: **15.11.95**

(51) Int. Cl.6: **B01J 29/87**, B01J 29/40, C01B 39/38

(21) Numéro de dépôt: **92903118.5**

(22) Date de dépôt: **24.12.91**

(86) Numéro de dépôt internationale :
**PCT/FR91/01068**

(87) Numéro de publication internationale :
**WO 92/12096 (23.07.92 92/19)**

Le dossier contient des informations techniques
présentées postérieurement au dépôt de la
demande et ne figurant pas dans le présent
fascicule.

(54) **ZEOLITHE DE TYPE MFI ET SON PROCEDE DE PREPARATION.**

(30) Priorité: **27.12.90 FR 9016529**

(43) Date de publication de la demande:
**16.12.92 Bulletin 92/51**

(45) Mention de la délivrance du brevet:
**15.11.95 Bulletin 95/46**

(84) Etats contractants désignés:
**BE DE GB IT NL**

(56) Documents cités:
**EP-A- 0 124 271**
**EP-A- 0 306 238**
**EP-A- 0 337 479**
**EP-A- 0 342 075**
**EP-A- 0 402 801**

(73) Titulaire: **INSTITUT FRANCAIS DU PETROLE**
**4, avenue de Bois Préau**
**F-92502 Rueil-Malmaison (FR)**

(72) Inventeur: **JOLY, Jean-François**
**20, rue Béranger**
**F-75003 Paris (FR)**
Inventeur: **CAULLET, Philippe**
**4, rue Kellermann**
**F-68110 Illzach (FR)**
Inventeur: **GUTH, Jean-Louis**
**59, rue Bellevue**
**Brunstatt**
**F-68200 Mulhouse (FR)**
Inventeur: **FAUST, Anne-Catherine**
**23, rue de Bourgogne**
**F-68200 Mulhouse (FR)**
Inventeur: **BRUNARD, Nathalie**
**5, quai des Etroits**
**F-69005 Lyon (FR)**

Rank Xerox (UK) Business Services
(3.10/3.09/3.3.3)

CHEMICAL ABSTRACTS, vol. 104, no. 10, 10 Mars 1986, Columbus, Ohio, US; abstract no. 75827Z, ZHAO, ZHENHUA: 'SYNTHESIS OF ZSM-5 ZEOLITE WITH A NEW METHOD' page 449 ;colonne G ;

CHEMICAL ABSTRACTS, vol. 105, no. 18, 3 Novembre 1986, Columbus, Ohio, US; abstract no. 155556W, 'DIRECT SYNTHESIS OF ZSM-5 ZEOLITE' page 149 ;colonne G ;

Inventeur: **KOLENDA, Frédéric**
**7, rue Abbé Papon**
**F-69005 Lyon (FR)**

(74) Mandataire: **Andreeff, François et al**
**INSTITUT FRANCAIS DU PETROLE**
**4, avenue de Bois-Préau**
**F-92506 Rueil-Malmaison Cédex (FR)**

## Description

La présente invention concerne une nouvelle zéolithe de type MFI et un procédé de préparation de cette zéolithe.

En raison de leurs propriétés de sélectivité géométrique et d'échange ionique, les zéolithes sont utilisées industriellement sur une large échelle, aussi bien en adsorption (par exemple séchage de gaz, séparation de paraffines linéaires et branchées) qu'en catalyse (par exemple craquage catalytique, hydrocraquage, isomérisation, oligomérisation).

Toutes les zéolithes de type MFI contenant les éléments Al et/ou Ga préparées jusqu'à présent ont été synthétisées soit en milieu alcalin (pH généralement supérieur à 9) en présence ou en absence d'agents organiques, soit en milieu fluorure (pH généralement inférieur à 10) en présence d'agents organiques.

Le milieu de synthèse fluorure peut en effet être utilisé pour obtenir la zéolithe MFI (FR-A-2567868, 2607128). Toutes les synthèses de zéolithes MFI en milieu fluorure selon l'art antérieur sont caractérisées par la présence dans le milieu réactionnel d'en agent organique : par exemple, tétrapropylammonium (TPA⁺) ou tétrapropylphosphonium. La forme protonée de la zéolithe s'obtient alors par calcination. Ainsi le document EP-A-342 075 décrit une zéolithe MFI de type gallosilicate synthétisée en milieu fluorure en présence de structurant organique.

D'un point de vue économique notamment, il serait très profitable de pouvoir synthétiser la zéolithe MFI en absence de structurant organique.

Par rapport au milieu de synthèse alcalin (OH⁻), le milieu fluorure présente un certain nombre d'avantages très appréciables (voir par exemple J.L. GUTH, H. KESSLER et R. WEY, Proc. 7th Int. Zeolite Conf., Tokyo, août 17-22, 1986, p. 121). En effet, en milieu alcalin, la plupart des zéolithes synthétisées sont métastables : on risque donc au cours de la synthèse de voir apparaître des phases solides plus stables et de précipiter des phases non désirées. Cette difficulté ne fait que s'accroître lorsque les quantités à préparer augmentent, c'est-à-dire lorsque l'on passe du stade laboratoire au stade industriel.

Un avantage supplémentaire des synthèses réalisées en milieu fluorure par rapport à celles réalisées en milieu classique OH⁻ est de conduire à des solides dont les propriétés acides et d'échange ionique sont de natures différentes. Les catalyseurs acides préparés à partir de solides obtenus en milieu fluorure présentent des propriétés catalytiques améliorées. Il est à ce niveau très important de remarquer que la structure cristallographique d'un solide ne suffit pas pour définir entièrement ses propriétés, et plus particulièrement ses propriétés acides qui jouent un rôle primordial en catalyse.

Contrairement à leurs homologues préparés en milieu basique en absence d'agent organique selon l'art antérieur, les zéolithes de type MFI selon l'invention contiennent du fluor après synthèse. Le fluor, comme nous le verrons plus loin, confère aux zéolithes MFI suivant l'invention des propriétés acides et d'échange ionique particulières.

Contrairement aux zéolithes MFI synthétisées en milieu fluorure selon l'art antérieur, les zéolithes MFI selon l'invention sont préparées en absence totale d'agent structurant organique.

L'invention a donc pour objet une nouvelle zéolithe cristalline synthétique de type MFI, ainsi qu'un procédé de synthèse en milieu fluorure et en absence d'agent organique de ladite zéolithe et qui confère de plus aux zéolithes selon l'invention des propriétés, particulièrement des propriétés acides, améliorées. La zéolithe MFI suivant l'invention peut être utilisée en adsorption et en catalyse.

La zéolithe cristalline synthétique de type MFI selon l'invention a :

a) la formule générale approchée suivante :

$$M^+_{(x+y)} [Si_{(96-(x+y))} Al_x Ga_y O_{192}]^{(x+y)-}$$

où M représente un cation alcalin et/ou un cation ammonium, et/ou un proton x est un nombre compris entre 0 et 24, y est un nombre compris entre 0 et 24, $(x+y)$ est un nombre compris entre 0,64 et 24 et de préférence entre 1,88 et 19,2.

b) un diagramme de diffraction des rayons X de sa forme ammonium représenté dans le tableau I de la description,

c) une teneur en fluor de sa forme ammonium comprise entre environ 0,01 et 2,0 % en poids, de préférence entre environ 0,02 et 1,0 % poids.

Elle a été synthétisée en milieu fluorure et en l'absence d'agent organique.

L'invention concerne aussi un procédé de préparation de ladite zéolithe de type MFI, qui consiste notamment en ce que :

a) on forme un mélange réactionnel en solution ayant un pH inférieur à environ 9 et comprenant de l'eau, au moins une source de silice, au moins une source d'aluminium, au moins une source de gallium, au moins une source d'agent mobilisateur contenant des ions fluorures ($F^-$), au moins une source de cations alcalins (notés $A^+$), lesdits cations alcalins étant de préférence des cations sodium ($Na^+$), éventuellement au moins une source de cations ammonium ($NH_4^+$), ledit mélange réactionnel ayant une composition, en termes de rapport molaire, comprise dans les intervalles de valeurs suivants :

Si/(Al + Ga) : 7-60, de préférence 14-50,
$F^-$/Si : 0,1-10, de préférence 0,1-8,
$H_2O$/Si : 5-25, de préférence 10-25,
$A^+$/Si : 0,1-10 de préférence 0,1-8,
$A^+/(A^+ + NH_4^+)$ : 0,1-1, de préférence 0,3-1,

b) on maintient ledit mélange réactionnel à une température de chauffage comprise entre environ 90 et environ 300 °C, de préférence entre environ 130 et environ 250 °C, jusqu'à ce que l'on obtienne un composé cristallin.

On peut avantageusement chauffer le mélange réactionnel dans un autoclave revêtu intérieurement de polytétrafluoroéthylène (PTFE) entre environ 90 et environ 300 °C et, de préférence, entre environ 130 et environ 250 °C, pendant une durée qui peut varier de quelques heures à quelques jours (habituellement 8 à 1200 heures) selon la température de réaction retenue, jusqu'à l'obtention d'un solide cristallisé que l'on sépare des eaux-mères généralement par filtration et qui est ensuite lavé par exemple à l'eau distillé.

De manière avantageuse, on peut préparer ledit mélange réactionnel à un pH compris entre environ 4 et environ 9 et, de manière préférée, entre environ 6 et environ 9.

Selon un mode préféré de préparation des zéolithes de type MFI suivant l'invention, les rapports molaires des constituants du mélange réactionnel sont compris dans les intervalles de valeurs suivants :

Si/(Al + Ga) : 14-40
$F^-$/Si : 0,2-5
$H_2O$/Si : 10-20
$A^+$/Si : 0,2-5
$A^+/(A^+ + NH_4^+)$ : 0,5-1.

On peut éventuellement ajouter audit mélange réactionnel au moins un sel complémentaire dans un rapport molaire sel complémentaire/$SiO_2$ compris généralement entre 0,1 et 0,4 et, de préférence, entre 0,2 et 0,5 et/ou au moins un germe de la zéolithe formée selon l'invention dans un rapport pondéral cristal de zéolithe/$SiO_2$ compris généralement entre 0,01 et 0,1 et, de manière préférée, entre 0,02 et 0,03, de telle sorte que la morphologie, la taille des cristaux ainsi que la cinétique de cristallisation peuvent être avantageusement contrôlées.

On peut travailler avantageusement en milieu agité, ce qui peut permettre de diminuer considérablement le temps de réaction.

Le pH du milieu réactionnel, inférieur à environ 9, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de silice peuvent être utilisées. On peut citer notamment les silices sous forme d'hydrogels, d'aérogels, de suspensions colloïdales, ainsi que les silices résultant de la précipitation de solutions de silicates solubles ou de l'hydrolyse d'esters siliciques comme l'ester tétraéthylique de l'acide orthosilicique $Si(OC_2H_5)_4$ ou de complexes comme le fluorosilicate de sodium $Na_2SiF_6$ ou d'ammonium $(NH_4)_2 SiF_6$.

Parmi les sources d'aluminium utilisées, on choisira de préférence (1) le chlorure d'aluminium hydraté (AlCl3, 6H2O), le nitrate d'aluminium nonahydraté ($Al(NO_3)_3$, $9H_2O$), le sulfate d'aluminium à 16 molécules d'eau ou le fluorure d'aluminium trihydraté $AlF_3$, $3H_2O$. On peut également citer les alkoxydes.

Par ailleurs, au lieu de partir de sources séparées de silice et d'aluminium, on peut également prendre des sources où les deux éléments sont combinés comme par exemple un gel aluminosilicaté fraîchement précipité.

Les sources de gallium utilisées sont, par exemple :
- les hydroxydes, les hydroxyoxydes et oxydes de gallium, les gallates et différents esters.
- les sels de gallium (sulfate, nitrate, chlorure, fluorure, acétate par exemple),

Il est également possible d'utiliser les sources contenant les éléments silicium et gallium associés tels par exemple des verres ou des co-gels.

Il est possible d'utiliser des sources où les éléments gallium et aluminium sont associés comme par exemple des gels obtenus par co-précipitation d'hydroxyde ou d'oxyhydroxydes de gallium et d'aluminium.

Il est également possible d'utiliser des sources où les éléments gallium, aluminium et silicium sont associés comme par exemple des gels amorphes, des verres ou des galloaluminosilicates cristallisés parmi lesquels on peut citer les argiles et les zéolithes.

Les anions fluorures F⁻ peuvent être introduits sous forme de métaux alcalins ou de sels d'ammonium comme par exemple NaF, $NH_4F$, $NH_4HF_2$ ou sous forme d'acide comme HF ou encore sous forme de composés hydrolysables pouvant libérer des anions fluorures dans l'eau comme le fluorure de silicium $SiF_4$ ou la fluorosilicate d'ammonium $(NH_4)_2SiF_6$ ou de sodium $Na_2SiF_6$.

Les acides ou sels acides, les bases ou sels basiques ajoutés éventuellement pour amener le pH parmi les acides courant comme, par exemple, HF, HCL, $HNO_3$, $H_2SO_4$, $CH_3COOH$ ou les sels acides comme, par exemple, $NH_4HF_2$, $KHF_2$, $NaHSO_4$, les bases courantes comme, par exemple, $NaHCO_3$, $CH_3COONa$, $Na_2S$, NaHS ou les mélanges tampons comme, par exemple, $(CH_3COOH, CH_3COONa)$ ou $(NH_4OH, NH_4Cl)$.

Le procédé de préparation des zéolithes de type MFI selon l'invention peut en outre comprendre, consécutivement aux étapes a) et b) mentionnées précédemment, au moins l'une des deux étapes suivantes :

c) on fait subir au composé obtenu à l'étape b) un traitement d'échange(s) ionique(s) par des cations ammonium ($NH_4$ +),

d) on calcine le composé obtenu à l'étape b) (dans le cas où on n'effectue pas d'étape c)) ou à l'étape c) à une température supérieure à environ 350 °C, de préférence supérieure à environ 450 °C et avantageusement comprise entre 520 et 750 °C, généralement sous atmosphère de gaz sec, comme par exemple de l'air ou un gaz inerte.

On peut introduire dans la zéolithe de structure MFI selon l'invention, par des techniques d'échanges ioniques bien connues dans l'art antérieur, au moins un élément de la classification périodique des éléments, dont les cations peuvent être préparés en milieu aqueux et choisi parmi les groupes IIA, IIIA, IB, IIB, IIIB, IVB, VIII de la classification périodique des éléments. On citera à titre d'exemple les cations alcalins ou alcalino-terreux, les cations de terres rares, $Fe^{II}$, $Fe^{III}$, $Co^{II}$, $Co^{III}$, $Ni^{II}$, $Cu^{II}$, $Ag^{I}$ et $Pt^{II}$.

L'identification des zéolithes de type MFI suivant l'invention peut se faire de manière aisée à partir de leur diagramme de diffraction des rayons X de leur forme ammonium. Ce diagramme de diffraction peut être obtenu à l'aide d'un diffractomètre en utilisant la méthode classique des poudres avec le rayonnement $K\alpha$ du cuivre. Un étalon interne permet de déterminer précisément les valeurs des angles $2\theta$ associées aux pics de diffraction. Les distances interréticulaires $d_{hkl}$, caractéristiques de l'échantillon, sont calculées à partir de la relation de Bragg. L'estimation de l'erreur de mesure $\Delta$ ($d_{hkl}$) sur $d_{hkl}$ se calcule en fonction de l'erreur absolue $\Delta$ ($2\theta$) affectée à la mesure de $2\theta$ par la relation de Bragg. En présence d'un étalon interne, cette erreur est minimisée et prise couramment égale à ±0,05°. L'intensité relative I/Io affectée à chaque valeur de $d_{hkl}$ est estimée à partir de la hauteur du pic de diffraction correspondant. Cette dernière peut également être déterminée à partir d'un cliché obtenu à l'aide d'une chambre de Debye-Scherrer.

Le tableau I représente le diagramme de diffraction des rayons X caractéristique de la forme ammonium de la zéolithe de type MFI selon l'invention. Dans la colonne des $d_{hkl}$ on a représenté les valeurs des distances interréticulaires $d_{hkl}$. Chacune de ces valeurs doit être affectée de l'erreur de mesure généralement comprise entre ±0,07 et ±0,02 suivant la valeur de $2\theta$ ($d_{hkl}$ est exprimée en $10^{-10}$ m).

La zéolithe de structure MFI selon l'invention, contenant éventuellement au moins un élément de la classification périodique décrit précédemment, peut être utilisée seule ou en mélange avec une matrice au sein d'un catalyseur.

Ladite zéolithe peut par exemple, après synthèse et modification (par exemple passage à la forme hydrogène par échange(s) puis calcination sous air), être mise en forme en utilisant une matrice qui peut être inerte ou active pour la réaction à promouvoir. Les matrices que l'on emploie sont généralement choisies dans le groupe formé par les argiles, les alumines, la silice, la magnésie, la zircone, l'oxyde de titane, l'oxyde de bore et toute combinaison d'au moins deux des composés précités comme la silice-alumine, la silice-magnésie etc. Toutes les méthodes connues d'agglomération et de mise en forme sont applicables, telles que par exemple, l'extrusion, le pastillage, la coagulation en goutte etc.

Le catalyseur possède alors une teneur pondérale en zéolithe de type MFI selon l'invention généralement comprise entre 1 et 99,5 %, de préférence entre 20 et 95 % et une teneur pondérale en matrice généralement comprise entre 0,5 et 99 %, de préférence entre 5 et 80 %.

Le catalyseur contenant la zéolithe de structure MFI selon l'invention peut renfermer en outre une fonction hydrogénante ou composé de métal choisi parmi les groupes IA, IIIA, VIB (Cr, Mo, W) et VIII (Pt, Pd ou/et Ni par exemple) de la classification périodique des éléments. Ledit métal ou compose de métal est déposé sur la zéolithe par toute méthode connue de l'homme du métier.

TABLEAU I

| $d_{hkl}(10^{-10}$ m) | $I/I_o$ |
|---|---|
| 11.14 | 66 |
| 9.99 | 43 |
| 9.72 | 18 |
| 7.44 | 7 |
| 6.71 | 11 |
| 6.37 | 11 |
| 5.99 | 17 |
| 5.70 | 13 |
| 5.58 | 17 |
| 5.38 | 6 |
| 5.14 | 6 |
| 4.98 | 11 |
| 4.62 | 9 |
| 4.37 | 16 |
| 4.27 | 13 |
| 4.10 | 11 |
| 4.01 | 14 |
| 3.86 | 100 |
| 3.82 | 94 |
| 3.75 | 62 |
| 3.73 | 66 |
| 3.65 | 33 |
| 3.60 | 10 |
| 3.49 | 13 |
| 3.45 | 14 |
| 3.36 | 13 |
| 3.32 | 17 |
| 3.05 | 16 |
| 2.98 | 21 |
| 2.95 | 10 |

Les exemples suivants illustrent l'invention sans toutefois en limiter la portée.

EXEMPLE I

Dans un autoclave de 0,5 litre en monel (alliage de cuivre et de nickel), on dissout 50,4 g de NaF (1,2 mole) à température ambiante dans 270 g d'eau (15 moles) ; à cette solution sont alors ajoutés sous agitation et successivement 74,45 g de "tixolex 28" échangé par $NH_4$ de rapport Si/Al = 7,45 et 0,75 g de cristaux de zéolithe MFI synthétisée en milieu fluorure et non calcinée (soit environ 1,4 % en poids de la silice engagée).

La composition du mélange réactionnel en termes de rapport molaire est la suivante :

Si/Al = 7,45 ; $F^-$/Si = 1,36 ; $H_2O$/Si = 17 ; $Na^+$/Si = 1,36

Le pH du mélange réactionnel est d'environ 8.

Le mélange est porté à la température de 200 °C et est maintenu à cette température sous agitation lente pendant 44 heures.

Après cette synthèse, le solide est recueilli par filtration, lavé à l'eau distillée, séché à l'étuve à 80 °C pendant 24 heures.

Le produit obtenu est cristallisé sous forme de zéolithe MFI, comme le montre le diagramme de diffraction des rayons X de sa forme ammonium (obtenue par échanges ioniques avec des cations ammonium) qui est caractéristique de la zéolithe MFI. Son rapport molaire $SiO_2/Al_2O_3$, déterminé par analyse chimique, est de 15,1, et le volume de sa maille élémentaire est de 5,410 nm$^3$. La teneur pondérale en fluor de sa forme ammonium est de 1,0 %.

EXEMPLE 2

Dans un autoclave de 0,5 litre en monel (alliage de cuivre et de nickel), on dissout 50,4 g de NaF (1,2 moles) à température ambiante dans 270 g d'eau (15 moles) ; à cette solution sont alors ajoutés sous agitation et successivement 74 g de "tixolex 28" traité par $HNO_3$ de rapport Si/Al = 14,6, 0,74 g de cristaux de zéolithe MFI synthétisée en milieu fluorure et non calcinée.

La composition du mélange réactionnel en termes de rapport molaire est la suivante :

Si/Al = 14,6 ; $F^-$/Si = 1,36 ; $H_2O$/Si = 16

Le pH du mélange réactionnel est d'environ 7,5.

Le mélange est porté à la température de 200 °C et est maintenu à cette température sous agitation lente pendant 44 heures.

Après cette synthèse, le solide est recueilli par filtration, lavé à l'eau distillée, séché à l'étuve à 80° pendant 24 heures.

Le produit obtenu est cristallisé sous forme de zéolithe MFI, comme le montre le diagramme de diffraction des rayons X de sa forme ammonium qui est caractéristique de la zéolithe MFI. Son rapport molaire $SiO_2/Al_2O_3$, déterminé par analyse chimique, est de 18,0 , et le volume de sa maille élémentaire est de 5,408 $nm^3$. La teneur pondérale en fluor de sa forme ammonium est de 0,5 %.

EXEMPLE 3 :

Dans un autoclave en Monel de 1 litre on dissout 50,4 g de NaF (1,2 moles) à température ambiante dans 450 g d'eau (25 moles) ; à cette solution sont alors ajoutés sous agitation et successivement 60 g de silice Merk ( 1mole), 15,6 g de $\gamma$ $Al(OH)_3$ (0,2 moles), et 0,60 g de cristaux de MFI synthétisée en milieu fluorure et non calcinée.

La composition du mélange réactionnel en termes de rapport molaire est la suivante :

Si/Al = 5 ; $F^-$/Si = 1,2 ; $H_2O/_{Si}$ = 25 ; Na $/_{Si}$ = 1,20

Le mélange est porté à 200 °C pendant 45 heures.

Après cette synthèse, le solide est recueilli par filtration, lavé à l'eau distillée, séché à l'étuve à 80 °C, 24 heures.

Le produit obtenu est caractérisé par le diagramme de diffraction des rayons X de sa forme ammonium semblable à celui du tableau I. Son rapport molaire $SiO_2/Al_2O_3$ est de 11. La teneur pondérale en fluor de sa forme ammonium est de 0,75 %.

EXEMPLE 4

Dans un autoclave de 1 litre, on dissout 50,4 g de NaF (1,2 modes) à température ambiante dans 450 g d'eau (25 moles) ; à cette solution sont alors ajoutés 60 g de silice Merk (1 mole, 16,9 g de $Ga(OH)_3$ (0,14 mole, préparé à partir de GacNO3)_3 par hydrolyse avec $NH_4OH$) et 0,6 g de cristaux de MFI synthétisée en milieu fluorure.

$Si/_{Ga}$ = 7 ; $F^-/_{Si}$ = 1,2 ; $H_2O/_{Si}$ = 25

Le mélange est porté à 200 °C pendant 45 heures.

Après cette synthèse, le solide est recueilli par filtration, lavé à d'eau distillée, séché à l'étuve à 80 °C, 24 heures.

Le produit obtenu est caractérisé par le diagramme de diffraction des rayons X de sa forme ammonium semblable à celui du tableau I. Son rapport molaire $SiO_2/Ga_2O_3$ est de 17. La teneur pondérale en fluor de sa forme ammonium est de 0,75 %.

**Revendications**

1. Zéolithe cristalline synthétique de type MFI ayant:

a) la formule générale approchée suivante :

$M^+_{(x+y)}$ [$Si_{(96-(x+y))}$ $Al_x$ $Ga_y$ $O_{192}$]$^{(x+y)-}$

où M représente un cation alcalin et/ou un cation ammonium, et/ou un proton X est un nombre compris entre 0 et 24, y est un nombre compris entre 0 et 24, (x + y) est un nombre compris entre 0,64 et 24.

**b)** un diagramme de diffraction des rayons X de sa forme ammonium représenté dans le tableau suivant:

| $D_{hkl}(10^{-10}m)$ | $I/I_o$ |
|---|---|
| 11,14 | 66 |
| 9,99 | 43 |
| 9,72 | 18 |
| 7,44 | 7 |
| 6,71 | 11 |
| 6,37 | 11 |
| 5,99 | 17 |
| 5,70 | 13 |
| 5,58 | 17 |
| 5,38 | 6 |
| 5,14 | 6 |
| 4,98 | 11 |
| 4,62 | 9 |
| 4,37 | 16 |
| 4,27 | 13 |
| 4,10 | 11 |
| 4,01 | 14 |
| 3,86 | 100 |
| 3,82 | 94 |
| 3,75 | 62 |
| 3,73 | 66 |
| 3,65 | 33 |
| 3,60 | 10 |
| 3,49 | 13 |
| 3,45 | 14 |
| 3,36 | 13 |
| 3,32 | 17 |
| 3,05 | 16 |
| 2,98 | 21 |
| 2,95 | 10 |

**c)** une teneur en fluor de sa forme ammonium comprise entre environ 0,01 et 2,0 % en poids, ladite zéolithe ayant été synthétisée en milieu fluorure et en l'absence d'agent organique.

2. Zéolithe selon la revendication 1 dans laquelle $(x + y)$ est un nombre compris entre 1,88 et 19,2.

3. Zéolithe selon l'une des revendications 1 et 2 dans laquelle la teneur en fluor de sa forme ammonium est comprise entre environ 0,02 et 1,0 % en poids.

4. Zéolithe selon l'une des revendications 1 à 3 renfermant au moins un élément choisi parmi les groupes IIA, IIIA, IB, IIB, IIIB, IVB et VIII de la classification périodique des éléments et dont les cations peuvent être préparés en milieu aqueux.

5. Zéolithe suivant la revendication 4 dans laquelle ledit élément est choisi dans le groupe formé par les alcalins, les alcalino-terreux, les terres rares, le fer, le cobalt, le nickel, le cuivre, l'argent, le platine et le gallium.

6. Catalyseur renfermant une zéolithe selon l'une des revendications 1 à 5 et une matrice.

7. Catalyseur renfermant une zéolithe selon l'une des revendications 1 à 5, une matrice et au moins un métal ou/et composé de métal choisi parmi les goupes IA, IIIA, VIB et VIII de la classification périodique des éléments.

**8.** Catalyseur selon la revendication 7 dans lequel ledit métal est choisi parmi le groupe formé par le chrome, le molybdène, le tungstène, le gallium, le platine, le palladium et le nickel.

**9.** Procédé de préparation d'une zéolithe selon l'une des revendications 1 à 3 qui consiste en ce que :

**a)** on forme un mélange réactionnel en solution ayant un pH inférieur à environ 9 et comprenant de l'eau, au moins une source de silice, au moins une source d'aluminium, au moins une source de gallium, au moins une source d'agent mobilisateur contenant des ions fluorures au moins une source de cations alcalins $A^+$, éventuellement au moins une source de cations ammonium, ledit mélange réactionnel ayant une composition, en termes de rapport molaire, comprise dans les intervalles de valeurs suivants :

| | |
|---|---|
| Si/(Al + Ga) | : 1-60 |
| $F^-$/Si | : 0,1-10 |
| $H_2O$/Si | : 5-100 |
| $A^+$/Si | : 0,1-10 |
| $A^+/(A^+ + NH_4^+)$ | : 0,1-1 |

**b)** on maintient ledit mélange réactionnel à une température de chauffage comprise entre environ 90 et environ 300 °C jusqu'à ce que l'on obtienne un composé cristallin.

**10.** Procédé selon la revendication 9 dans lequel, dans l'étape a), ledit mélange réactionnel a une composition, en termes de rapport molaire, comprise dans les intervalles de valeurs suivants :

| | |
|---|---|
| Si/(Al + Ga) | : 2-50 |
| $F^-$/Si | : 0,1-10 |
| $H_2O$/Si | : 10-50 |
| $A^+$/Si | : 0,1-8 |
| $A^+/(A^+ + NH_4^+)$ | : 0,3-1 |

**11.** Procédé selon l'une des revendications 9 et 10 dans lequel, dans l'étape a), le pH dudit mélange réactionnel est compris entre environ 4 et environ 9.

**12.** Procédé selon l'une des revendications 9 à 11 dans lequel lesdits cations alcalins sont des cations sodium $Na^+$.

**13.** Procédé selon l'une des revendications 9 à 12 comprenant en outre au moins l'une des deux étapes suivantes :

**c)** on fait subir au composé obtenu à l'étape b) un traitement d'échange(s) ionique(s) par des cations ammonium,

**d)** on calcine le composé obtenu à l'étape b) ou à l'étape c) à une température supérieure à environ 350 °C.

**Claims**

**1.** Synthetic crystalline zeolite of the MFI type, having :

a) the following approximate general formula:

$$M^+{}_{(x+y)}[Si_{(96-(x-y))} Al_x Ga_y O_{192}]^{(x-y)-}$$

in which M represents an alkaline cation and/or an ammonium cation and/or a proton, x is a number between 0 and 24, y a number between 0 and 24 and (x + y) a number between 0.64 and 24,

b) a X-ray diagram of its ammonium form shown in the following Table :

| $D_{hkl}(10^{-10}m)$ | $I/I_o$ |
|---|---|
| 11,14 | 66 |
| 9,99 | 43 |
| 9,72 | 18 |
| 7,44 | 7 |
| 6,71 | 11 |
| 6,37 | 11 |
| 5,99 | 17 |
| 5,70 | 13 |
| 5,58 | 17 |
| 5,38 | 6 |
| 5,14 | 6 |
| 4,98 | 11 |
| 4,62 | 9 |
| 4,37 | 16 |
| 4,27 | 13 |
| 4,10 | 11 |
| 4,01 | 14 |
| 3,86 | 100 |
| 3,82 | 94 |
| 3,75 | 62 |
| 3,73 | 66 |
| 3,65 | 33 |
| 3,60 | 10 |
| 3,49 | 13 |
| 3,45 | 14 |
| 3,36 | 13 |
| 3,32 | 17 |
| 3,05 | 16 |
| 2,98 | 21 |
| 2,95 | 10 |

c) a fluorine content of its ammonium form between approximately 0.01 and 2.0% by weight, said zeolite having been synthesized in a fluoride medium and in the absence of an organic agent.

2. Zeolite according to claim 1, wherein (x + y) is a number between 1.88 and 19.2.

3. Zeolite according to either of the claims 1 and 2, wherein the fluorine content of its ammonium form is between approximately 0.02 and 1.0% by weight.

4. Zeolite according to any one of the claims 1 to 3 containing at least one element chosen from among groups IIA, IIIA, IB, IIB, IIIB, IVB and VIII of the periodic classification of elements and whose cations can be prepared in an aqueous medium.

5. Zeolite according to claim 4, wherein said element is chosen from within the group formed by alkaline earths, alkali metals, rare earths, iron, cobalt, nickel, copper, silver, platinum and gallium.

6. Catalyst containing a zeolite according to any one of the claims 1 to 5 and a matrix.

7. Catalyst containing a zeolite according to any one of the claims 1 to 5, a matrix and at least one metal and/or metal compound chosen from among the groups IA, IIIA, VIB and VIII of the periodic classification of elements.

8. Catalyst according to claim 7, wherein said metal is chosen from within the group formed by chromium, molybdenum, tungsten, gallium, platinum, palladium and nickel.

9. Process for the preparation of a zeolite according to any one of the claims 1 to 3, consisting in that:

EP 0 517 891 B1

a) a reaction mixture in solution is formed having a pH below approximately 9 and containing water, at least one silica source, at least one aluminium source, at least one gallium source, at least one mobilizing agent source containing fluoride ions, at least one alkaline cation $A^+$ source, optionally at least one ammonium cation source, said reaction mixture having a composition, in molar ratio terms, within the following value ranges:

Si/(Al + Ga) : 1-60
$F^-$/Si : 0.1-10
$H_2O$/Si : 5-100
$A^+$/Si : 0.1-10
$A^+/(A^+ + NH_4^+)$ : 0.1-1

b) said reaction mixture is kept at a heating temperature between approximately 90 and approximately 300°C until a crystalline compound is obtained.

10. Process according to claim 9, wherein, in stage a), said reaction mixture has a composition, in molar ratio terms, within the following value ranges:

Si/(Al + Ga) : 2-50
$F^-$/Si : 0.1-10
$H_2O$/Si : 10-50
$A^+$/Si : 0.1-8
$A^+/(A^+ + NH_4^+)$ : 0.3-1

11. Process according to either of the claims 9 and 10, wherein, in stage a), the pH of the reaction mixture is between approximately 4 and approximately 9.

12. Process according to any one of the claims 9 to 11, wherein said alkaline cations are $Na^+$ sodium cations.

13. Process according to any one of the claims 9 to 12, also comprising at least one of the two following stages:

c) the compound obtained in stage b) undergoes an ion exchange treatment by ammonium cations,
d) the compound obtained in stage b) or in stage c) is calcined at a temperature above approximately 350°C.

**Patentansprüche**

1. Synthetischer kristalliner Zeolith vom MFI-Typ, der

a) die folgende allgemeine Überschlagsformel

$$M^+_{(x+y)} [Si_{(96-(x+y))}Al_xGa_yO_{192}]^{(x+y)-},$$

worin M ein Alkalikation und/oder ein Ammoniumkation und/oder ein Proton bedeutet, X eine Zahl ist, die zwischen 0 und 24 enthalten ist, y eine Zahl ist, die zwischen 0 und 24 enthalten ist, (x + y) eine Zahl ist, die zwischen 0,64 und 24 enthalten ist,

b) ein Röntgenbeugungsdiagramm seiner Ammoniumform, das in der folgenden Tabelle dargestellt ist:

| $D_{hkl}(10^{-10}m)$ | $I/I_o$ |
|---|---|
| 11,14 | 66 |
| 9,99 | 43 |
| 9,72 | 18 |
| 7,44 | 7 |
| 6,71 | 11 |
| 6,37 | 11 |
| 5,99 | 17 |
| 5,70 | 13 |
| 5,58 | 17 |
| 5,38 | 6 |
| 5,14 | 6 |
| 4,98 | 11 |
| 4,62 | 9 |
| 4,37 | 16 |
| 4,27 | 13 |
| 4,10 | 11 |
| 4,01 | 14 |
| 3,86 | 100 |
| 3,82 | 94 |
| 3,75 | 62 |
| 3,73 | 66 |
| 3,65 | 33 |
| 3,60 | 10 |
| 3,49 | 13 |
| 3,45 | 14 |
| 3,36 | 13 |
| 3,32 | 17 |
| 3,05 | 16 |
| 2,98 | 21 |
| 2,95 | 10 |

c) einen Gehalt an Fluor seiner Ammoniumform, der zwischen etwa 0,01 und 2,0 Gew.-% liegt, aufweist, wobei der Zeolith in einem Fluoridmilieu und in Abwesenheit von organischem Mittel synthetisiert worden ist.

2. Zeolith nach Anspruch 1, worin (x + y) eine Zahl ist, die zwischen 1,88 und 19,2 enthalten ist.

3. Zeolith nach einem der Ansprüche 1 und 2, worin der Gehalt an Fluor seiner Ammoniumform zwischen etwa 0,02 und 1,0 Gew.-% enthalten ist.

4. Zeolith nach einem der Ansprüche 1 bis 3, der wenigstens ein Element, das aus den Gruppen IIA, IIIA, IB, IIB, IIIB, IVB und VIII des Periodensystemes ausgewählt ist und dessen Kationen in wäßrigem Milieu hergestellt werden können, umfaßt.

5. Zeolith nach Anspruch 4, worin das Element aus der Gruppe ausgewählt ist, die aus den Alkalimetallen, den Erdalkalimetallen, den Seltenen Erden, Eisen, Cobalt, Nickel, Kupfer, Silber, Platin und Gallium gebildet ist.

6. Katalysator, der einen Zeolith gemäß einem der Ansprüche 1 bis 5 und eine Matrix umfaßt.

7. Katalysator, der einen Zeolith gemäß einem der Ansprüche 1 bis 5, eine Matrix und wenigstens ein Metall oder/und eine Verbindung eines Metalles, das aus den Gruppen IA, IIIA, VIB und VIII des Periodensystems ausgewählt ist, umfaßt.

8. Katalysator nach Anspruch 7, worin das Metall aus der Gruppe ausgewählt ist, die durch Chrom, Molybdän, Wolfram, Gallium, Platin, Palladium und Nickel gebildet ist.

9. Verfahren zur Herstellung eines Zeoliths nach einem der Ansprüche 1 bis 3, das darin besteht, daß:

a) man ein Reaktionsgemisch in Lösung erzeugt, das einen pH-Wert von unter etwa 9 aufweist und Wasser, wenigstens eine Siliciumdioxidquelle, wenigstens eine Aluminiumquelle, wenigstens eine Galliumquelle, wenigstens eine Aktivierungsmittelquelle, welche Fluorid-Ionen enthält, wenigstens eine Quelle für Alkalikationen $A^+$, gegebenenfalls wenigstens eine Ammoniumkationenquelle umfaßt, wobei das Reaktionsgemisch eine im Molverhältnis ausgedrückte Zusammensetzung aufweist, die in den folgenden Werteintervallen enthalten ist:

$Si/(Al + Ga)$ : 1-60
$F^-/Si$ : 0,1-10
$H_2O/Si$ : 5-100
$A^+/Si$ : 0,1-10
$A^+/(A^+ + NH_4^+)$ : 0,1-1

b) man das Reaktionsgemisch bei einer Heiztemperatur, die zwischen etwa 90 und etwa 300°C liegt, hält, bis man eine kristalline Verbindung erhält.

10. Verfahren nach Anspruch 9, worin in Schritt a) das Reaktionsgemisch eine im Molverhältnis ausgedrückte Zusammensetzung aufweist, die in den folgenden Werteintervallen liegt:

$Si/(Al + Ga)$ : 2-50
$F^-/Si$ : 0,1-10
$H_2O/Si$ : 10-50
$A^+/Si$ : 0,1-8
$A^+/(A^+ + NH_4^+)$ : 0,3-1

11. Verfahren nach einem der Ansprüche 1 und 10, worin in Schritt a) der PH-Wert des Reaktionsgemisches zwischen etwa 4 und etwa 9 liegt.

12. Verfahren nach einem der Ansprüche 9 bis 11, worin die Alkalikationen Natriumkationen $Na^+$ sind.

13. Verfahren nach einem der Ansprüche 9 bis 12, das desweiteren wenigstens einen der zwei folgenden Schritte umfaßt:

c) man unterwirft die in Schritt b) erhaltene Verbindung einer Behandlung von Ionenaustausch bzw. Ionenaustauschen durch Ammoniumkationen,

d) man kalziniert die in Schritt b) oder in Schritt c) erhaltene Verbindung bei einer Temperatur von über etwa 350°C.